# EUROPEAN PATENT APPLICATION

(11) **EP 1 452 948 A1**
(43) Date of publication of application: **01.09.2004**
(21) Application number: 02783781.4
(22) Date of filing: 05.12.2002
(51) Int. Cl.: G06F 3/00, H04B 1/38, H04M 11/00, H04M 1/00

(54) **MOBILE COMMUNICATION TERMINAL, APPLICATION EXECUTING CONTROL METHOD, APPLICATION EXECUTING CONTROL PROGRAM, AND COMPUTER-READABLE RECORDING MEDIUM**

(30) Priority: 07.12.2001 JP 2001374664
(71) Applicant: NTT DoCoMo, Inc., Tokyo 100-6150 (JP)
(72) Inventor: NAGANUMA, Takefumi, c/o NTT DoCoMo, Inc., Chiyoda-ku, Tokyo 100-6150 (JP); TSUDA, Masayuki, c/o NTT DoCoMo, Inc., Chiyoda-ku, Tokyo 100-6150 (JP); NAGASAWA, Hideyuki, c/o NTT DoCoMo, Inc., Chiyoda-ku, Tokyo 100-6150 (JP); OSEKI, Eriko, c/o NTT DoCoMo, Inc., Chiyoda-ku, Tokyo 100-6150 (JP); MAEDA, Fukiko, c/o NTT DoCoMo, Inc., Chiyoda-ku, Tokyo 100-6150 (JP); WATANABE, Nobuyuki, c/o NTT DoCoMo, Inc., Chiyoda-ku, Tokyo 100-6150 (JP); ASAI, Mao, c/o NTT DoCoMo, Inc., Chiyoda-ku, Tokyo 100-6150 (JP); KONDO, Takashi, c/o NTT DoCoMo, Inc., Chiyoda-ku, Tokyo 100-6150 (JP); YAMADA, Kazuhir, c/o NTT DoCoMo, Inc., Chiyoda-ku, Tokyo 100-6150 (JP); KAMIYA, Dai, c/o NTT DoCoMo, Inc., Chiyoda-ku, Tokyo 100-6150 (JP)
(74) Representative: GROSSE BOCKHORNI SCHUMACHER
(86) International application number: PCT/JP2002/012772
(87) International publication number: WO 2003/052569

(57) **Abstract**

An object of the present invention is to preserve an input screen in a mobile communication terminal even when application software requests a screen switch while the input screen is displayed, and to improve user operability and reliability. The cellular phone 1 pertaining to the present invention comprises a display 5, memory unit 6 and control unit 2. The display 5 is a display device for displaying information, and the memory unit 6 is a storage device containing application software for presenting an input screen. The control unit 2 retrieves and executes theapplicationsoftwarefromthememoryunit 6, anddisplays the input screen presented by the application software on the display 5. The control unit 2 performs control such that a screen switch based on a screen switch request is not executedwhen the application software outputs the screen switch request while the input screen is displayed.

## Description

### Technical Field

The present invention relates to a mobile communication terminal provided with display means for displaying information and designed to execute application software for presenting an input screen, and to an application execution control method, application execution control program, and computer-readable recording medium for the mobile communication terminal.

### Background Art

In current practice, switching of display screens by application software can be accomplished during dialog display or execution involving a front end processor (FEP) in personal computers (PC), cellular phones, and other devices capable of executing application software. Such switching isn' t a problem. Because user can easily recognize the fact that the active screen has been switched, by the window system or the like in personal computers and other devices with high display capabilities.

In cellular phones, however, the effective screen (active screen) occupies the entire display area, so the user has difficulty realizing that a screen switch has occurred when such a screen switch is performed in the middle of input during FEP execution, and the information being entered may sometimes be discarded altogether. This is disadvantageous in that user operability and reliability is adversely affected in cellular phones.

An object of the present invention, which was perfected in order to address the aforementioned problems, is to provide a mobile communication terminal, application execution control method, application execution control program, and computer-readable recording medium in which the input screen can be preserved even when an application requests a screen switch while the input screen is displayed, and in which user operability and reliability are improved.

### Disclosure of the Invention

Aimed at attaining the stated object, the mobile communication terminal pertaining to the present invention is characterized in comprising display means for displaying information, storage means that stores application software for presenting a specific screen, execution control means for retrieving and executing the application software from the storage means and displaying the specific screen presented by the application software on the display means, and switch control means for performing control such that a screen switch based on a screen switch request is not executed if the application software outputs this screen switch request while the specific screen is displayed.

In the mobile communication terminal thus configured, the execution control means retrieves and executes application software from the storage means and displays on the display means the specific screen presented by the application software. The switch control means performs control such that a screen switch based on a screen switch request is not executed when the application software outputs the screen switch request while the specific screen is displayed. This allows the specific screen to be retained and operability and reliability to be improved for the user of a mobile communication terminal even when application software requests a screen switch while a specific screen is displayed.

Control by the switch control means can assume a variety of forms. Specifically, the switch control means can be configured such that a screen switch request outputted by application software is stored while a specific screen is displayed, and a screen switch based on the stored screen switch request is executed when the display of the specific screen is completed. The corresponding merit is that a screen switch request outputted by application software is stored while a specific screen is displayed, and a screen switch based on the stored screen switch request is executed when the display of the specific screen is completed, making it possible to prevent the screen switch request from being ignored and discarded, and to ensure that non-instantaneous actions are always executed.

At this time, the switch control means may also allow only the screen switch request outputted last in chronological order to be stored as the screen switch request. In this case, outputting a plurality of screen switch requests will cause only the screen switch request outputted last in chronological order to be stored, and only a screen switch based on the final screen switch request to be executed. Specifically, performing a screen switch based on the final screen switch request is sufficient for processing when a plurality of screen switch requests is outputted, making it possible to enhance processing efficiency and to reduce the storage area for storing screen switch requests by dispensing with screen switch routines based on all but the final screen switch request. In particular, reducing the storage area is important for mobile communication terminals because of their low memory capacity.

The switch control means may also execute only the screen switch based on the screen switch request outputted last in chronological order from the screen switch requests stored. In this case, performing the screen switch based on the final screen switch request is sufficient for processing, making it possible to enhance processing efficiency by dispensing with screen switch routines based on all but the final screen switch request, as described above.

The switch control means may also be configured such that screen switch requests outputted by application software are erased while a specific screen is displayed, and the application software is notified that the screen switch requests have been erased. This aspect can be used in cases in which screen switch requests outputted by application software while a specific screen is displayed may be considered to be causedby a software malfunction and erased.

Erasing such abnormal screen switch requests prevents their storage and execution and reduces the processing load. In addition, informing the application software that a screen switch request has been erased prevents situations in which the application software continues to malfunction without being aware of the erasure.

Various screens that require continuous execution of applications can be used as such specific screens. Examples include data input screens and other screens for which no screen switching is desired. Such specific screens may be not only static screens but also screens with moving images.

The invention pertaining to the above-described mobile communication terminal can also be described as an invention pertaining to an application execution control method executedbythemobilecommunicationterminal, asshownbelow. These are based on substantially the same technological idea and have the same actions and merits.

Specifically, the application execution control method pertaining to the present invention is an application execution control method whereby a mobile communication terminal provided with display means for displaying information executes application software that presents a specific screen, characterized in that control is performed so as not to execute screen switches based on screen switch requests outputted by the application software if the screen switch requests are made while the specific screen presented by the application software is displayed by the display means.

In this case, it is also possible for screen switch requests outputted by application software to be stored while a specific screen is displayed, and screen switches based on the stored screen switch requests to be executed when the display of the specific screen is completed.

It is also possible to adopt an arrangement in which only the screen switch request outputted last in chronological order is stored as the screen switch request.

It is further possible to execute only a screen switch based on the screen switch request outputted last in chronological order from the screen switch requests stored.

According to another possible arrangement, screen switch requests outputted by application software are erased while a specific screen is displayed, and the application software is notified that the screen switch requests have been erased.

Various screens that require continuous execution of applications can be used as such specific screens in the application execution control method described above.

Examples include data input screens and other screens for which no screen switching is desired. Such specific screens may be not only static screens but also screens with moving images.

The application execution control program pertaining to the present invention is characterized in that a computer provided to a mobile communication terminal comprising display means for displaying information and storage means for storing application software that presents a specific screen is caused to function as execution control means for retrieving and executing the application software from the storage means and displaying a specific screen presented by the application software on the display means, and as switch control means for performing control such that a screen switch based on a screen switch request is not executed if the application software outputs this screen switch request while the specific screen is displayed.

The computer-readable recording medium pertaining to the present invention is characterized in that the application execution control program is recorded thereon. For example, a memory stick, IC chip, magnetic disk, optical disk, CD-ROM, or the like may be adopted as the recording medium.

The objects and other features or merits of the present invention will be apparent to those skilled in the art from the detailed description given below with reference to the accompanying diagrams.

### Brief Description of the Drawings

Fig. 1 is a schematic diagram depicting an example of the overall configuration of an application delivery system;
Fig. 2 is a block diagram depicting the functional configuration of a cellular phone;
Fig. 3 is a block diagram depicting the functional configuration of an application delivery server;
Fig. 4A is an example of a screen display during an FEP startup;
Fig. 4B is an example of a screen display during dialog display;
Fig. 5 is a flowchart describing a processing routine initiated by the generation of a screen switch request;
Fig. 6 is a flowchart describing a processing routine initiated by the completion of an operable component;
Fig. 7 is a flowchart depicting a modified example of the routine in Fig. 6;
Fig. 8 is a flowchart depicting a modified example of the routine in Fig. 5;
Fig. 9 is a conceptual diagram depicting the structure of the application execution control program; and
Fig. 10 is a diagram depicting a state in which a memory stick is mounted on a cellular phone.

### Best Modes for Carrying Out the Invention

An embodiment of the present invention will hereafter be described with reference to the accompanying diagrams. In the description and accompanying diagrams that follow, "application software" is abbreviated as "application."

### [Device Structure of the Embodiment]

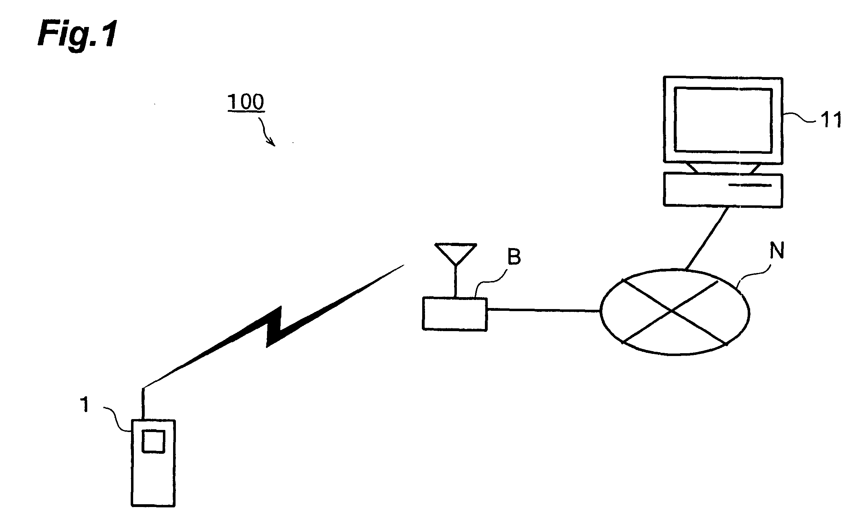

The device structure of the present embodiment will first be described. Fig. 1 is a schematic diagram depicting an example of the overall configuration of the application delivery system 100 according to the present embodiment. As depicted in Fig. 1, the application delivery system 100 comprises a cellular phone 1 (corresponds to the mobile communication terminal pertaining to the present invention) and an application delivery server 11. The cellular phone 1 is connected to a packet communication network N via a base transceiver station B. Furthermore, the application delivery server 11 is connected by wire to the packet communication network N.

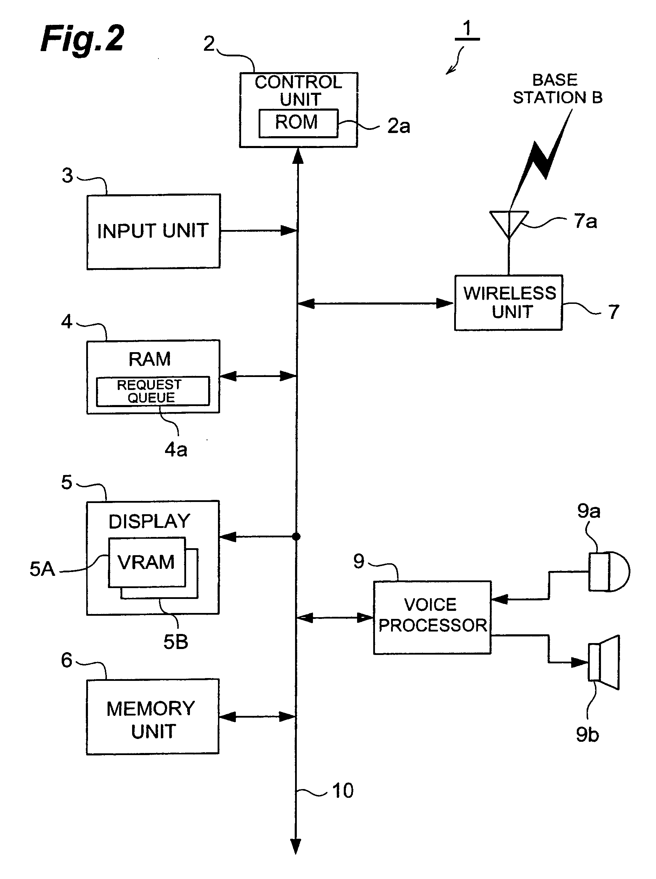

The internal structure of the cellular phone 1 will hereafter be described in detail with reference to Fig. 2. Fig 2 is a block diagram depicting the functional configuration of the cellular phone 1. As depicted in Fig. 2, the cellular phone 1 comprises a control unit 2 (corresponds to execution control means and switch control means), input unit 3, RAM 4, display 5 (corresponds to display means), memory unit 6 (corresponds to storage means), wireless unit 7, and voice processor 9; and these elements are connected via a bus 10 to enable the input and output of various signals.

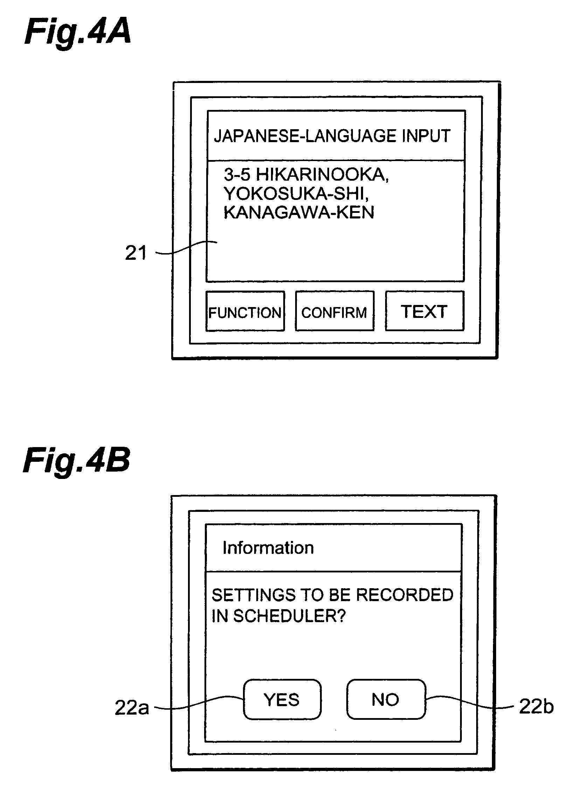

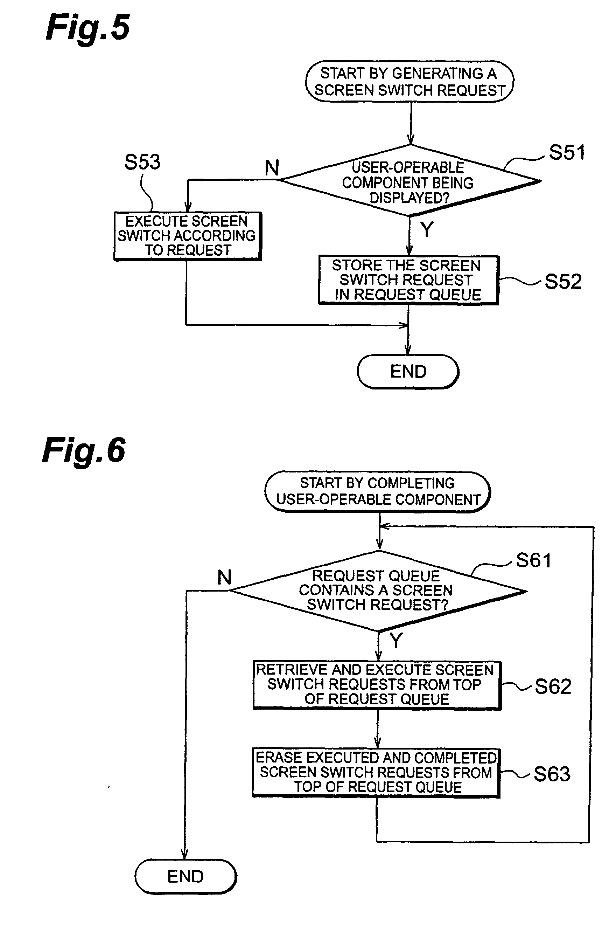

The control unit 2 contains ROM (Read Only Memory) 2a, retrieves a program stored in advance in the ROM 2a and deploys it to the RAM 4, and centrally controls each element according to the program. In addition, the control unit 2 initiates execution of an application downloaded from the application delivery server 11 and stored in the memory unit 6. Furthermore, the control unit 2 executes the routine in Fig. 5 once a screen switch request is outputted from the application while this application is being executed. For example, the routine in Fig. 6 is executed upon completion of an FEP for providing a Japanese-language input screen such as the one shown in Fig. 4A, or a program for providing a dialog-type input screen such as the one shown in Fig. 4B (these will be commonly referred to hereinbelow as "user-operable components"). The specifics of the routines shown in Figs. 5 and 6 will be described below.

It is assumed that the user can enter Japanese characters in the input area 21 on the input screen in Fig. 4A and that the user can select the operating button 22a for a positive reply or the operating button 22b for a negative reply on the input screen in Fig. 4B.

The input unit 3 is provided with various operating buttons for directing power ON/OFF, functionselection, and the like; and these operating buttons output input signals that correspond to instruction specifics to the control unit 2 by being pushed independently or in combination.

The RAM (Random Access Memory) 4 comprises semiconductors or the like, and temporarily stores programs retrieved from the ROM 2a and data retrieved from the memory unit 6 in the various routines executed by the control unit 2. In addition, a request queue 4a for temporarily storing screen switch requests outputted by the application is created in the RAM 4 by the control unit 2.

The display 5 is composed of an LCD (Liquid Crystal Display), EL (Electro Luminescence), or the like, and displays data on a screen according to display signals that are inputted from the control unit 2. In addition, the display 5 comprises a plurality of (two in the example shown herein) VRAM (Video RAM) 5A and 5B capable of storing the screen data of the entire screen display, and is configured such that screen switching is carried out by switching the VRAM 5A and 5B used for display during screen switching.

The memory unit 6 is composed of EEPROM (Electrically Erasable and Programmable ROM) or other nonvolatile semiconductor memory, and stores data necessary for the control unit 2 to execute various routines, data generated as a result of such execution, and the like. An application (the aforementioned FEP, a dialog-type application, or the like) containing the program to be supplied to the input screen (see Figs. 4A and 4B) is stored in the memory unit 6 after being downloaded from the application delivery server 11.

The wireless unit 7 comprises a circuit having a modem unit (not shown) for performing modulation/demodulation of signals, and a coding/decoding unit (not shown) for performing coding/decoding of signals; and is provided with an antenna 7a. The antenna 7a is telescopically mounted on the upper part of the cellular phone 1 casing, and is designed to exchange data with the base transceiver station B.

When transmissions are received, the modem unit performs a demodulating routine on the signal input from the antenna 7a to produce a signal that can be processed by the coding/decoding unit. When transmissions are sent, a routine is also performed to modulate the digital signal converted in the coding/decoding unit into a signal that can be wirelessly transmitted. The coding/decoding unit is configured according to a codec (CODEC) and is designed to perform processing (demodulation) to convert the digital signal input from the modem unit into an analog signal when transmissions are received. When transmissions are sent, processing (modulation) is also performed for converting a voice signal or other analog signal into a digital signal, and the converted digital signal is compressed into a quantity of data suitable for transmission.

The voice processor 9 comprises a converter, amplifier, or the like, and is providedwith a microphone 9a and speaker 9b. During a call, the voice processor 9 converts the voice data input from the control unit 2 into analog signals in the converter, and drives the speaker 9b via the amplifier.

During a call, the voice processor 9 also converts the voice signal input from the microphone 9a into a wirelessly transmittable digital signal by means of the converter, and outputs the result to the wireless unit 7.

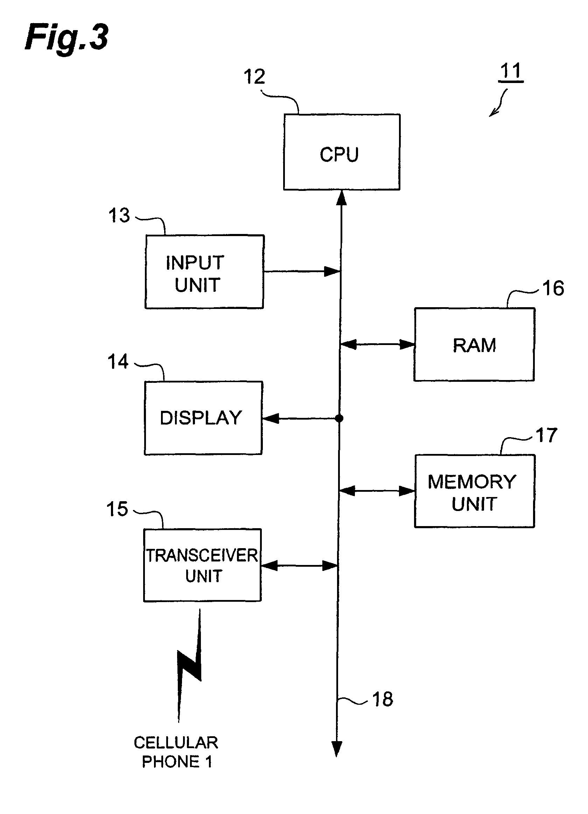

The internal configuration of the application delivery server 11 will next be described with reference to Fig. 3. As depicted in Fig. 3, the application delivery server 11 comprises a CPU 12, input unit 13, display 14, transceiver unit 15, RAM 16, and memory unit 17, with the elements connected to each other by a bus 18.

The CPU (Central Processing Unit) 12 retrieves various programs stored in the memory unit 17 and deploys them to the RAM 16, and controls the operation of each element according to the program. The input unit 13 is provided with a keyboard, mouse, and the like, and the input information is outputted as an input signal to the CPU 12. The display 14 comprises an LCD (Liquid Crystal Display), CRT (Cathode Ray Tube), or other display apparatus.

The memory unit 17 stores programs and processing data. The transceiver unit 15 exchanges data via the packet communication network N under control from the CPU 12. In particular, the transceiver unit 15 has the function of allowing the programs stored in the memory unit 17 to be downloaded to the cellular phone 1 via the packet communication network N and the base transceiver station B.

The RAM (Random Access Memory) 16 forms a temporary storage area for theprograms, processingdata, andother information retrieved from the memory unit 17 in the various routines executed and controlled by the CPU 12.

### [Operation of the Present Embodiment]

A routine (Fig. 5) that accompanies a screen switch request generation executed by the control unit 2 of the cellular phone 1, and a routine (Fig. 6) that follows completion of a user-operable component will now be described as the operation elements of the present embodiment in the order indicated.

Execution of the routine in Fig. 5 is started by the control unit 2 when the application being executed in the cellular phone 1 outputs a screen switch request and this request is received by the control unit 2. In S51 of Fig. 5, the control unit 2 determines whether a user-operable component is being displayed on the display 5 at this time. The system may proceed with the screen switch if no user-operable component is being displayed at this time, so the operation proceeds to S53, the screen switch is executed in accordance with the request, and the routine in Fig. 5 is completed. The screen switch is performed by switching the VRAM 5A and 5B used for display purposes in Fig. 2 during the screen switch in S53.

If, on the other hand, a user-operable component is being displayed, as shown in Figs. 4A and 4B, the operation proceeds to S52, the screen switch request is stored in the request queue 4a, and the routine in Fig. 5 is completed. With a routine such as the one shown in Fig. 5, outputting a screen switch request by the application being executed does not result in the execution of a screen switch based on this request if a user-operable component is being displayed at this time, and the screen switch request is stored in the request queue 4a.

Execution of the routine in Fig. 6 is then started by the control unit 2 when the user completes inputting a Japanese-language entry to the input area 21 in Fig. 4A or when the user-operable component is completed by selecting theoperatingbutton 22a or 22b in Fig. 4B. In S61 of Fig. 6, the control unit 2 determines whether a screen switch request is stored in the request queue 4a. If no screen switch requests are stored in the request queue 4a, there is no need to execute a screen switch, and the routine in Fig. 6 is therefore completed.

If, on the other hand, screen switch requests are stored in the request queue 4a, the operation proceeds to S62, a screen switch request is retrieved from the top of the request queue 4a (that is, in the order in which the requests are stored in the request queue 4a), and a screen switch based on the screen switch request thus retrieved is executed. The screen switch is performed by switching the VRAM 5A and 5B used for display purposes in Fig. 2 in the course of screen switching. After the execution, the screen switch request for which the execution has been completed is erased from the top of the request queue 4a in S63. A screen switch request that is second from top in the request queue 4a is thereby moved to the top.

The operation finally returns to S61, the routines in S61 to S63 are repeated until no more screen switch requests are available from the request queue 4a, and the routine in Fig. 6 is completed when no more screen switch requests are available from the request queue 4a.

Through the routine in Fig. 6 described above, the screen switch requests in the request queue 4a are retrieved one by one in the old sequence, and screen switches are executed after the completion of the user-operable component in the cellular phone 1.

According to the present embodiment, a user-operable component continues to be displayed when the application requests a screen switch while the component is being displayed, so it is possible to improve operability and reliability for the user of a cellular phone, as described above. In addition, a screen switch request outputted by the application is stored in a request queue, and a screen switch based on this screen switch request is executed when the display of the component is completed, so it is possible to prevent such screen switch requests from being ignored and discarded, and to ensure that non-instantaneous actions are always executed.

### [Other Embodiments]

Although the above embodiment was described with reference to an example in which screen switches based on the screen switch requests in a request queue were executed in sequence, it is also possible to adopt an aspect in which only a screen switch based on the newest screen switch request stored last in chronological order is executed from the screen switch requests stored.

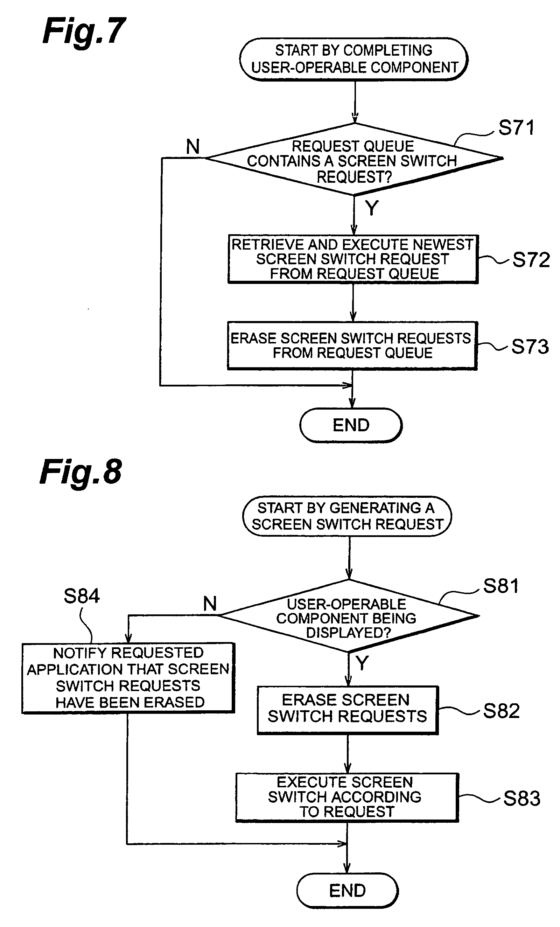

In view of this, the routine in Fig. 7 will now be described with reference to an aspect in which only a screen switch based on the newest screen switch request is executed.

When a user-operable component is completed in the cellular phone 1, the control unit 2 starts executing the routine in Fig. 7 instead of the routine in Fig. 6 described above. In S71 of Fig. 7, the control unit 2 determines whether any screen switch requests are stored in the request queue 4a. If no screen switch requests are stored in the request queue 4a, there is no need to execute a screen switch, and the routine in Fig. 7 is therefore completed.

If, on the other hand, some screen switch requests are stored in the request queue 4a, the operation proceeds to S72, the newest screen switch request (request stored last in chronological order) in the request queue 4a is retrieved, and a screen switch based on the screen switch request thus retrieved is executed. The screen switch is performed by switching the VRAM 5A and 5B used for display purposes in Fig. 2 in the course of such screen switching. After the execution, all the screen switch requests in the request queue 4a are deleted in S73, and the routine in Fig. 7 is completed.

With the routine in Fig. 7 described above, it is sufficient to perform a screen switch based on the newest screen switch request as the routine carried out when a plurality of screen switch requests is stored, and processing efficiency can therefore be enhanced in the cellular phone 1 by dispensing with the screen switch processing based on screen switch requests other than the newest screen switch request.

An aspect in which only the newest screen switch request is stored in the request queue 4a may also be proposed for executing only a screen switch based on the newest screen switch request. Specifically, the newest screen switch request should be stored by being overwritten in the request queue 4a in S52, which is part of the routine in Fig. 5 described above. Since only the newest screen switch request is thereby stored in the request queue 4a, only the screen switch based on the newest screen switch request is executed in the routine of Fig. 6. It is possible in this case to reduce the storage area needed for storing screen switch requests. In particular, reducing the storage area is important for mobile communication terminals because of their low memory capacity.

In cases in which screen switch requests outputted by application software while a specific screen is displayed may be considered to be caused by a software malfunction and erased, it is possible to adopt an aspect in which such abnormal screen switch requests are erased to prevent their storage and execution.

For example, the routine shown in Fig. 8 should be executed when a screen switch request is outputted. Specifically, the control unit 2 determines in S81 of Fig. 8 whether a user-operable component is being displayed on the display 5 at this time. The system may proceed with the screen switch if no user-operable component is being displayed at this time, so the operation proceeds to S84, the screen switch is executed in accordance with the request, and the routine in Fig. 8 is completed. The screen switch is performed by switching the VRAM 5A and 5B used for display purposes in Fig. 2 during the screen switch in S84. If, on the other hand, a user-operable component is being displayed, the operation proceeds to S82, and the screen switch request is erased. In S83, the application that has outputted the screen switch request is notified that the screen switch request has been erased, and the routine in Fig. 8 is completed.

With a routine such as the one shown in Fig. 8, a screen switch request outputted by the application being executed is erased and the application is notified that the screen switch request has been erased if a user-operable component is being displayed at this time, making it possible to prevent situationsin which the application continues to malfunction without being aware of the erasure.

The above embodiment was described with reference to a cellular phone as a mobile communication terminal, but another information device capable of wireless communication, such as a PHS (Personal Handyphone System) or a PDA (Personal Digital Assistance), may also be used. The application software to which the present invention can be applied is not subject to any particular limitations as long as screens that require continued execution of the application can be presented. In addition, the presented screen is not limited to an input screen, and may also be a screen for which no screen switching is desired. The presented screens may be not only a static screen but also a screen with moving images.

A description will now be given concerning an application execution control program and computer-readable recording medium (abbreviated hereinbelow as "a recording medium") pertaining to an embodiment of the present invention. A memory stick detachably mountable on a cellular phone may, for example, be used as the recording medium in the present embodiment.

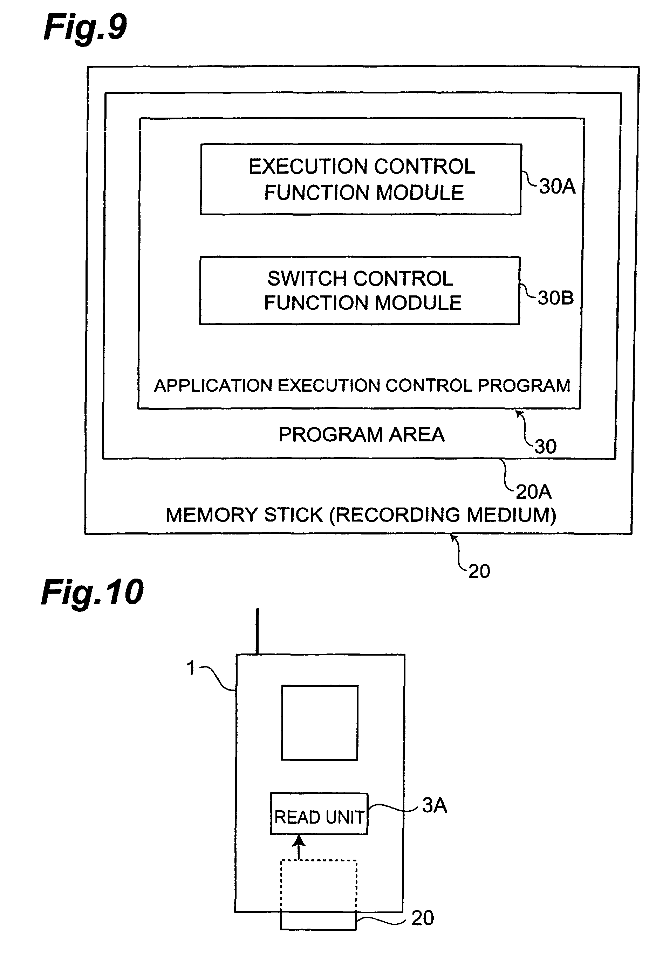

Fig. 10 depicts a state in which a memory stick 20 is mounted as a recording medium on a cellular phone 1 in accordance with the present embodiment. The cellular phone 1 contains a read unit 3A provided as a type of the input unit 3 shown in Fig. 2, and the read unit 3A is enabled to read various types of information, programs, and the like from the memory stick 20 that is set at a specific position.

Fig. 9 depicts the structure of the application execution control program 30. The application execution control program 30 comprises an execution control function module 30A that causes the control unit 2 (that is, computer) of the cellular phone 1 in Fig. 2 to function as execution control means for retrieving and executing application software from the memory unit 6, and causing the specific screen presented by the application software to be displayed on the display 5; and a switch control function module 30B that causes the control unit to function as switch control means for performing control such that a screen switch based on a screen switch request outputted by the application software is not executed if this screen switch request is outputted while the specific screen is displayed. The application execution control program 30 is stored in a programarea 20A for storing programs on the memory stick 20.

### Industrial Applicability

According to the present invention, control is performed such that when application software outputs a screen switch request while an input screen is displayed, the screen switch based on this screen switch request is not executed, as described above, so the input screen is retained, and operability and reliability can be improved for the user of a mobile communication terminal.

## Claims

1. A mobile communication terminal, comprising:
display means for displaying information;
storage means that stores application software for presenting a specific screen;
execution control means for retrieving and executing the application software from the storage means and displaying the specific screen presented by the application software on the display means; and
switch control means for performing control such that a screen switchbasedon a screen switch request is not executed if the application software outputs this screen switch request while the specific screen is displayed.

2. The mobile communication terminal according to claim 1, **characterized in that** the switch control means stores a screen switch request outputted by application software while the specific screen is displayed, and causes a screen switch based on the stored screen switch request to be executed when the display of the specific screen is completed.

3. The mobile communication terminal according to claim 2, **characterized in that** only the screen switch request outputted last in chronological order is stored as the screen switch request.

4. The mobile communication terminal according to claim 2, **characterized in that** only a screen switchbased on the screen switch request outputted last in chronological order is executed from the screen switch requests stored.

5. The mobile communication terminal according to claim 1, **characterized in that** the switch control means erases screen switch requests outputted by application software while the specific screen is displayed, and notifies the application software that the screen switch requests have been erased.

6. The mobile communication terminal according to any of claims 1 to 5, **characterized in that** the specific screen is a data input screen.

7. An application execution control method whereby a mobile communication terminal provided with display means for displaying information executes application software that presents a specific screen, the application execution control method being **characterized in that** control is performed so as not to execute screen switches based on screen switch requests outputted by the application software if the screen switch requests are made while the specific screen presented by the application software is displayed by the display means.

8. The application execution control method according to claim 7, **characterized in that** a screen switch request outputted by the application software while the specific screen is displayed is stored; and
a screen switch based on the stored screen switch request is executed when the display of the specific screen is completed.

9. The application execution control method according to claim 8, **characterized in that** only the screen switch request outputted last in chronological order is stored as the screen switch request.

10. The application execution control method according to claim 8, **characterized in that** only a screen switch based on the screen switch request outputted last in chronological order is executed from the screen switch requests stored.

11. The application execution control method according to claim 7, **characterized in that** screen switch requests outputted by the application software are erased while the specific screen is displayed; and
the application software is notified that the screen switch requests have been erased.

12. The application execution control method according to any of claims 7 to 11, **characterized in that** the specific screen is a data input screen.

13. An application execution control program which causes a computer provided to a mobile communication terminal comprising display means for displaying information and storage means for storing application software that presents a specific screen to function as:
execution control means for retrieving and executing the application software from the storage means and displaying a specific screen presented by the application software on the display means; and
switch control means for performing control such that a screen switch based on a screen switch request is not executed if the application software outputs this screen switch request while the specific screen is displayed.

14. A computer-readable recording medium, **characterized in that** the application execution control program according to claim 13 is recorded thereon.
